# EUROPEAN PATENT APPLICATION

(11) **EP 4 470 696 A1**
(43) Date of publication of application: **04.12.2024**
(21) Application number: 23177003.3
(22) Date of filing: 02.06.2023
(51) Int. Cl.: B23C 5/06, B23C 5/20

(54) **CUTTING INSERT FOR USE IN FACE MILLING AND FACE MILLING CUTTER COMPRISING SUCH A CUTTING INSERT**

(71) Applicant: Seco Tools AB, 737 82 Fagersta (SE)
(72) Inventor: Franceschi, Marco, SE-737 82 Fagersta (SE); Lovato, Costantino, SE-737 82 Fagersta (SE)
(74) Representative: Sandvik

(57) **Abstract**

A cutting insert for use in face milling and turnable into different working positions. The cutting insert comprises a peripheral surface (10) extending around the cutting insert between a rake face (2) and an opposite abutment face (3), wherein a part of the peripheral surface is provided with ridges (11) and intermediate valleys (12) such that a peripheral edge (20) between the rake face and the peripheral surface has a shape of a toothed ring with external teeth (21). A major cutting edge (30), a surface-wiping cutting edge (31) and a minor corner cutting edge (32) are provided along each tooth (21), wherein the major cutting edge (30) has an entering angle of 75° or more in at least one point along its extension. Each tooth (21) is asymmetric in relation to a reference line that extends perpendicularly to the surface-wiping cutting edge (31) of the tooth and intersects a centre of the surface-wiping cutting edge halfway between two opposite end points thereof.

## Description

### FIELD OF THE INVENTION AND PRIOR ART

The present invention relates to a cutting insert according to the preamble of claim 1 for use in face milling. The invention also relates to a face milling cutter comprising at least one such cutting insert.

A face milling cutter is a rotating cutting tool used for performing face milling operations on a workpiece. In a face milling operation, a flat surface is cut perpendicular to the centre axis of the tool body of the face milling cutter. A face milling cutter may be provided with several cutting inserts detachably mounted in a respective insert seat in the tool body of the face milling cutter. Each individual cutting insert may be provided with several identical sets of cutting edges, to thereby allow each cutting insert to be turned into different working positions. When a cutting edge of a cutting insert has been worn out, the cutting insert may be repositioned in its insert seat and mounted in a new working position with another set of cutting edges in an active cutting position.

A face milling cutter of the above-mentioned type may be provided with cutting inserts configured to perform so-called roughing, i.e. chip removing with a rather large depth of cut, by means of a major or main cutting edge of each cutting insert. A face milling cutter of the above-mentioned type may as an alternative be provided with cutting inserts configured to perform so-called finishing, i.e. shallow surface smoothing of a surface on the workpiece, by means of a surface-wiping cutting edge of each cutting insert.

The cutting insert of the present invention is intended to be used for finishing by face milling, particularly for finishing components of turbo charger housings.

### OBJECT OF THE INVENTION

The object of the present invention is to provide a cutting insert that has a new and favourable design and that is suitable for use in finishing by means of a face milling cutter of the above-mentioned type.

### SUMMARY OF THE INVENTION

According to the invention, said object is achieved by means of a cutting insert having the features defined in claim 1.

The cutting insert according to the present invention is turnable into different working positions and comprises:
- a rake face and an abutment face arranged on opposite sides of the cutting insert, the cutting insert having a centre axis that extends between the rake face and the abutment face, wherein the abutment face comprises an abutment surface that is configured to serve as a tangential abutment surface of the cutting insert in said working positions of the cutting insert and abut against a corresponding tangential support surface in an insert seat in a tool body of a face milling cutter when the cutting insert is mounted in the insert seat in any of its working positions;
- a peripheral surface extending around the cutting insert between the rake face and the abutment face, wherein a first part of the peripheral surface that is adjacent to and adjoins to the rake face is provided with at least eight radially protruding ridges equally distributed about the centre axis and each of which extending from the rake face in a direction towards the abutment face, each pair of adjacent ridges of the at least eight ridges forming a valley that extends in the first part of the peripheral surface from the rake face in a direction towards the abutment face such that a peripheral edge formed at an intersection between the rake face and the peripheral surface, as seen in a plan view along the centre axis, has a shape of a substantially circular toothed ring with external teeth congruent to each other and corresponding in number to the number of said ridges, wherein each one of these teeth comprises:
   - a straight or convex first edge section forming a tip of the tooth and having a first end point at a leading end and a second end point at an opposite trailing end, as seen in a counter-clockwise direction about the centre axis when viewing the rake face in a plan view along the centre axis,
   - a second edge section connected to the first edge section at said first end point and forming a leading flank edge of the tooth as seen in said counter-clockwise direction, and
   - a third edge section connected to the first edge section at said second end point and forming a trailing flank edge of the tooth as seen in said counter-clockwise direction; and
- several sets of cutting edges, wherein each one of these several sets of cutting edges is constituted by a part of a respective one of said teeth.

Each one of said several sets of cutting edges comprises a surface-wiping cutting edge, a major cutting edge and a minor corner cutting edge, wherein the surface-wiping cutting edge is constituted by said first edge section of the associated tooth and extends between the first and second end points of this first edge section, the minor corner cutting edge is constituted by a part of said third edge section of the associated tooth and connected to the surface-wiping cutting edge of the same set of cutting edges at the second end point thereof, and the major cutting edge is constituted by a part of said second edge section of the associated tooth that extends from a first reference plane that is parallel to the centre axis and contains the first and second end points of the first edge section that forms the surface-wiping cutting edge of the same set of cutting edges to a second reference plane that is parallel to said first reference plane and contains a tangent to the minor corner cutting edge of an adjacent set of cutting edges associated with an adjacent tooth immediately in front of the major cutting edge as seen in said counter-clockwise direction.

The major cutting edge of each one of said several sets of cutting edges has an entering angle of 75° or more in at least one point along its extension as seen in relation to the first reference plane associated with the same major cutting edge. This large entering angle implies decreased burr formation. Furthermore, the axial forces on a workpiece during facing milling with a face milling cutter may be kept low when the major cutting edges of the cutting inserts of the face milling cutter have an entering angle of 75° or more. Owing to the fact that the cutting insert of the present invention is provided with major cutting edges that have an entering angle of 75° or more, this cutting insert is suitable for use in finishing of workpiece parts that are very thin and therefore only capable of withstanding face milling with low axial force.

Furthermore, a first distance along the second reference plane between the third edge section of each tooth and a reference line that extends perpendicularly to the first reference plane of the tooth and intersects a centre of said first edge section of the tooth halfway between the first and second end points thereof is larger, preferably at least 10% larger, more preferably at least 20% larger, than a second distance along the second reference plane between the second edge section of the tooth and this reference line. This reference line can be regarded as a centre line of the associated tooth, wherein the above-mentioned difference between said first distance and said second distance implies that each tooth is asymmetric in relation to its centre line. Hereby, the leading flank edge of each tooth may be designed with a main focus of achieving a large entering angle of the associated major cutting edge, whereas the trailing flank edge of each tooth may be designed with a slope that differs from the slope of the opposite leading flank edge of the same tooth and with a main focus of achieving a strong cutting insert.

The above-mentioned centre axis of the cutting insert extends between a centre point of the rake face and a centre point of the abutment face. By a centre point is meant a centroid or a geometric centre. The cutting insert may be provided with a through hole, which extends centrally through the cutting insert between the rake face and abutment face, wherein a centre axis of the through hole coincides with the centre axis of the cutting insert.

In each working position of the cutting insert, when properly mounted in a dedicated insert seat in a face milling cutter, one of the different sets of cutting edges is to be in an active cutting position with the surface-wiping cutting edge of the active set facing axially forward and extending beyond a front face of a tool body of the face milling cutter and such that a straight line connecting the first and second end points of said surface-wiping cutting edge is comprised in a plane substantially perpendicular to a centre axis of the tool body, i.e. perpendicular within manufacturing tolerances, with the major cutting edge of the active set facing radially outward away from a centre axis of the tool body and with the minor corner cutting edge of the active set facing radially inward toward the centre axis of the tool body.

The leading end of a first edge section refers to the end of a first edge section that is provided in the cutting insert circumferentially in front of the opposed end of the same first edge section as seen in the above-mentioned counter-clockwise direction, i.e. circumferentially forwardly of the opposed end of the same first edge section as seen in said counter-clockwise direction. In the corresponding manner, the trailing end of a first edge section refers to the end of a first edge section that is provided in the cutting insert circumferentially behind the opposed end of the same first edge section as seen in said counter-clockwise direction, i.e. circumferentially rearwardly of the opposed end of the same first edge section as seen in said counter-clockwise direction.

The leading flank edge of a tooth refers to the flank edge of a tooth that is provided in the cutting insert circumferentially in front of the opposed flank edge of the same tooth as seen in the above-mentioned counter-clockwise direction, i.e. circumferentially forwardly of the opposed flank edge of the same tooth as seen in said counter-clockwise direction. In the corresponding manner, the trailing flank edge of a tooth refers to the flank edge of a tooth that is provided in the cutting insert circumferentially behind the opposed flank edge of the same tooth as seen in said counter-clockwise direction, i.e. circumferentially rearwardly of the opposed flank edge of the same tooth as seen in said counter-clockwise direction.

The major cutting edge of each one of said several sets of cutting edges preferably has an entering angle of 80° or more in at least one point along its extension as seen in relation to the first reference plane associated with the same major cutting edge. Furthermore, the major cutting edge of each one of said several sets of cutting edges preferably has a maximum entering angle that is smaller than or equal to 90° as seen in relation to the first reference plane associated with the same major cutting edge.

According to an embodiment of the invention, the second edge section of each one of said teeth meets the third edge section of an adjacent tooth at a radially innermost point of the part of the peripheral edge located between the first end point of the first edge section connected to this second edge section and the second end point of the first edge section connected to this third edge section of the adjacent tooth, wherein the angular distance between this radially innermost point and this second end point is larger, preferably at least 50% larger, than the angular distance between this radially innermost point and this first end point, as viewed from the centre axis. Thus, the deepest point of the gap between two consecutive teeth, i.e. the point of the gap closest to the centre axis of the cutting insert, is located closer to the first edge section that is connected to the second edge section facing the gap than to the first edge section that is connected to the third edge section facing the gap.

According to another embodiment of the invention, said ridges on the first part of the peripheral surface, and thereby said teeth, are at least ten, preferably at least twelve, in number.

According to another embodiment of the invention, the first edge section of each one of said teeth is convex and has a radius of curvature that is larger than a radius of a circumscribed circle of said toothed ring. Said radius of curvature is with advantage 20 mm or more, preferably 30 mm or more, and more preferably 50 mm or more. Furthermore, the circumscribed circle of said toothed ring preferably has a radius of 5-13 mm, more preferably 7-10 mm.

According to another embodiment of the invention, the perpendicular distance between said first reference plane and said second reference plane is 1 mm or smaller, preferably 0.8 mm or smaller, and preferably at least 0.5 mm.

According to another embodiment of the invention, a second part of the peripheral surface that is adjacent to and adjoins to the abutment face is provided with several indexing means equally distributed about the centre axis and corresponding in number to the number of said ridges. Thus, the number of indexing means also corresponds to the number of teeth on the above-mentioned toothed ring and thereby to the number of sets of cutting edges and the number of alternative working positions of the cutting insert. Each one of said several indexing means is preferably constituted by a respective abutment surface on the second part of the peripheral surface that is essentially flat or that is concave as seen in any plane that extends across the abutment surface and is perpendicular to the centre axis. In each working position of the cutting insert, two of these abutment surfaces at a time are intended to abut against corresponding support surfaces in a dedicated insert seat in a tool body of a face milling cutter to thereby ensure a correct and stable positioning of the cutting insert in the insert seat. Each one of said abutment surfaces on the second part of the peripheral surface is preferably configured to serve as an axial abutment surface of the cutting insert in one of the working positions of the cutting insert and configured to serve as a radial abutment surface of the cutting insert in another one of the working positions of the cutting insert.

According to another embodiment of the invention, all areas on said ridges and valleys on the first part of the peripheral surface project radially beyond an outer periphery of the second part of the peripheral surface. Thus, said ridges and valleys all project radially beyond the second part of the peripheral surface and the abutment surfaces provided thereon, which is favourable with respect of the clearance of the active cutting edges of the cutting insert when the cutting insert is mounted in a dedicated insert seat in a tool body of a face milling cutter in any of its working positions.

According to another embodiment of the invention, the cutting insert has 360°/n rotational symmetry about the centre axis, wherein n is an integer corresponding to the number of said ridges. In this context, the cutting insert is considered to have 360°/n rotational symmetry about the centre axis even if any of the rake face, the abutment face or the peripheral surface is provided with one or more minor markings, for instance in the form of recesses, that lack 360°/n rotational symmetry image about the centre axis, on condition that these one or more markings have no relevance for the functioning of the cutting insert.

Further advantageous features of the cutting insert according to the present invention will appear from the description following below.

The invention also relates to a face milling cutter comprising at least one cutting insert of the above-mentioned type.

According to an embodiment of the invention, the face milling cutter comprises a tool body with an insert seat configured to receive said at least one cutting insert, wherein the surface-wiping cutting edge of one of said several sets of cutting edges of this cutting insert is configured to be in an active cutting position, i.e. such that said surface-wiping cutting edge extends beyond the front face of the tool body of the face milling cutter and such that a straight line connecting the first and second end points of said surface-wiping cutting edge is comprised in a plane that is substantially perpendicular, i.e. perpendicular within manufacturing tolerances of the tool body and the cutting insert, to a centre axis of the tool body, when the cutting insert is mounted in the insert seat in one of its working positions and wherein this active surface-wiping cutting edge has a positive clearance as seen in any plane that extends across this active surface-wiping cutting edge and contains the centre axis of the cutting insert.

The tool body of the face milling cutter preferably comprises a plurality of insert seats, each of which being configured to receive a cutting insert of the type described above, wherein the first and second end points of the active surface-wiping cutting edge of each cutting insert is substantially comprised, i.e. comprised within manufacturing tolerances of the tool body and the cutting insert, in said plane perpendicular to the centre axis of the tool body.

Further advantageous features of the face milling cutter according to the present invention will appear from the description following below.

### BRIEF DESCRIPTION OF THE DRAWINGS

With reference to the appended drawings, a specific description of embodiments of the invention cited as examples follows below. In the drawings:
- Fig 1a: is a perspective view of a cutting insert according to an embodiment of the present invention,
- Fig 1b: is a lateral view of the cutting insert of Fig 1a,
- Fig 1c: is a plan view from below of the cutting insert of Fig 1a,
- Fig 1d: is a plan view from above of the cutting insert of Fig 1a,
- Fig 1e: is a cut according to the line Ie-Ie in Fig 1d,
- Fig 2: is a plan view of a peripheral edge formed at an intersection between a rake face and a peripheral surface of the cutting insert of Fig 1a,
- Fig 3: is a detail enlargement of a part of the peripheral edge of Fig 2,
- Fig 4: is a perspective view of a face milling cutter provided with cutting inserts according to the embodiment illustrated in Figs 1a-1e,
- Fig 5: is a front view of the face milling cutter of Fig 4,
- Fig 6: is a lateral view of the face milling cutter of Fig 4,
- Fig 7: is a cut according to the line VII-VII in Fig 6,
- Fig 8: is a detail enlargement of a part of the face milling cutter of Fig 4,
- Fig 9: is a lateral view of a part of the face milling cutter of Fig 4, and
- Fig 10: is a cut according to the line X-X in Fig 9.

### DETAILED DESCRIPTION OF EMBODIMENTS OF THE INVENTION

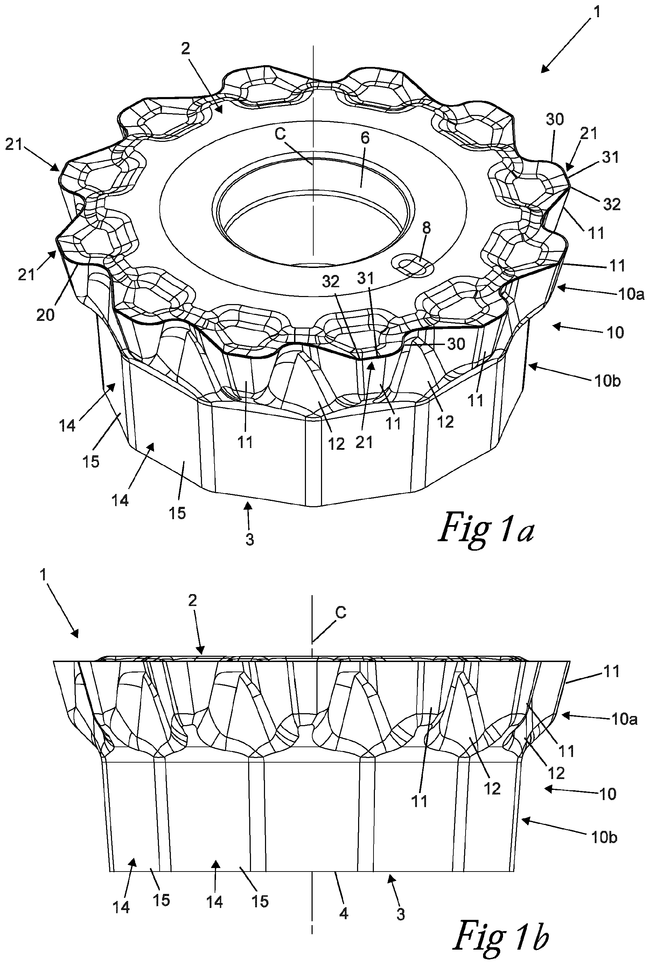

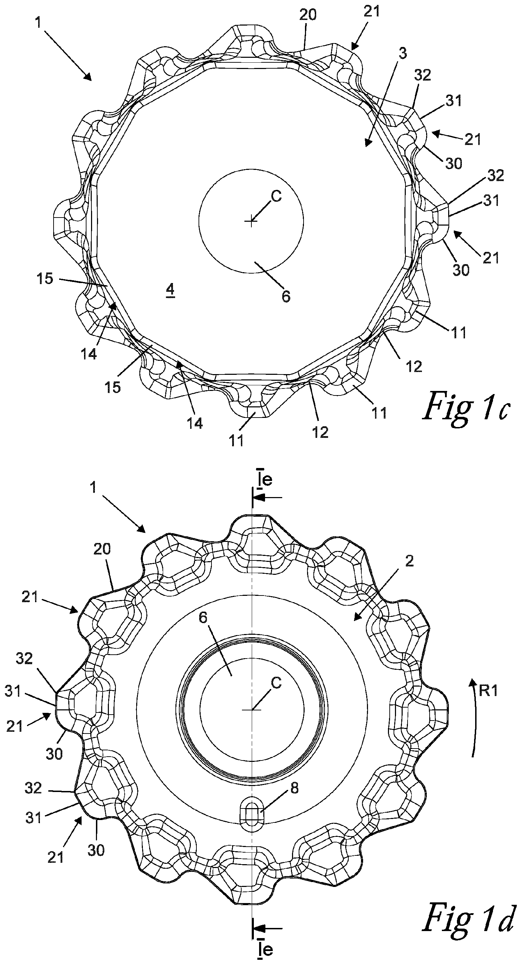

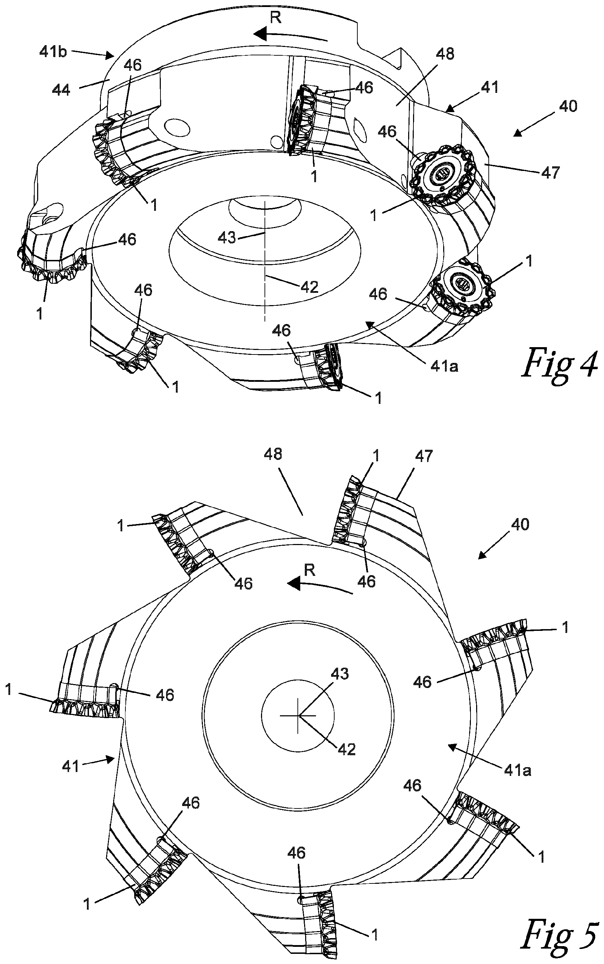

An embodiment of a cutting insert 1 according to the present invention is illustrated in Figs 1a-1e. The cutting insert 1 is configured to be used in a face milling cutter, for instance a face milling cutter 40 of the type illustrated in Figs 4-10.

The cutting insert 1 is turnable into different working positions. The cutting insert 1 comprises a rake face 2 and an abutment face 3 arranged on opposite sides of the cutting insert 1. The cutting insert 1 has a centre axis C, which extends between the rake face 2 and the abutment face 3.

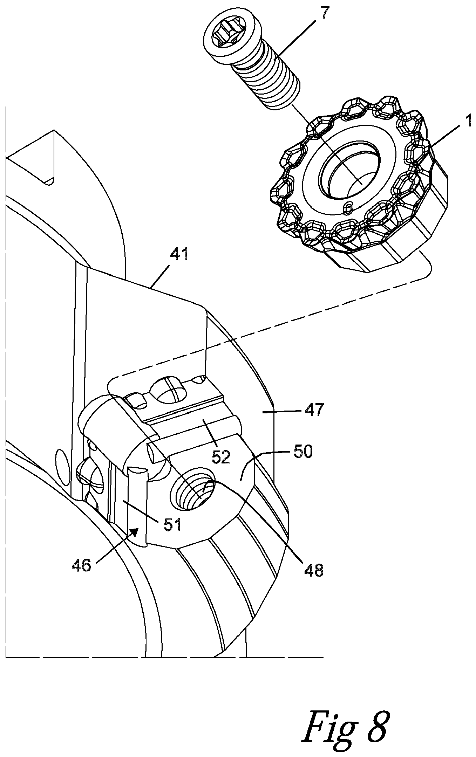

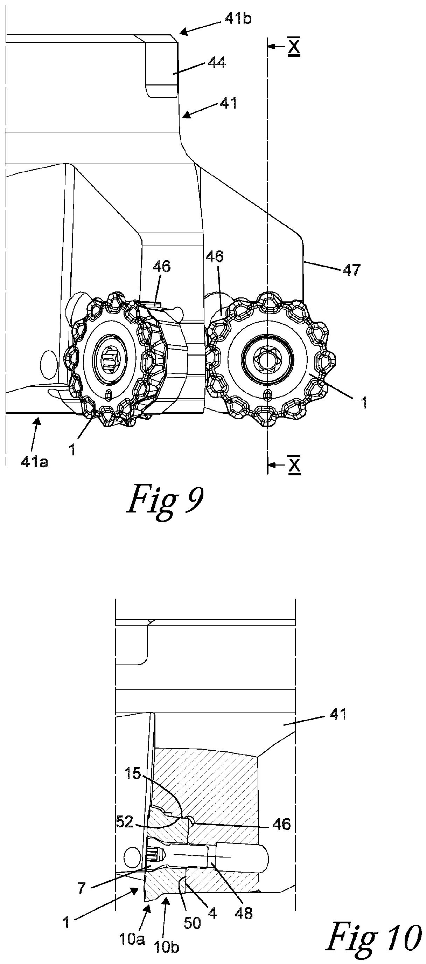

The abutment face 3 comprises an abutment surface 4 that is configured to serve as a tangential abutment surface of the cutting insert 1 in said working positions of the cutting insert and abut against a corresponding tangential support surface 50 (see Figs 8 and 10) in an insert seat 46 in a tool body 41 of a face milling cutter 40 when the cutting insert 1 is mounted in the insert seat 46 in any of its working positions. Thus, the abutment surface 4 on the abutment face 3 is configured to serve as the tangential abutment surface of the cutting insert 1 in all of the working positions of the cutting insert. In the illustrated embodiment, the abutment surface 4 on the abutment face 3 is flat, or at least essentially flat, and extends perpendicularly to the centre axis C.

In the illustrated embodiment, the cutting insert 1 is provided with a through hole 6, which extends centrally through the cutting insert between the rake face 2 and the abutment face 3. The through hole 6 is configured to receive a fastening element 7, for instance in the form of a screw, by means of which the cutting insert may be releasably fixed to an insert seat 46 of a face milling cutter 40. The centre axis C of the cutting insert 1 coincides with the centre axis of the through hole 6. The cutting insert 1 may as an alternative lack a through hole 6, wherein the cutting insert is configured to be releasably fixed to an insert seat of a face milling cutter by means of suitable clamping means.

A peripheral surface 10 extends around the cutting insert 1 between the rake face 2 and the abutment face 3. The peripheral surface 10 comprises a first part 10a that is adjacent to and adjoins to the rake face 2 and a second part 10b that is adjacent to and adjoins to the abutment face 3. The first part 10a of the peripheral surface 10 is provided with several radially protruding ridges 11 equally distributed about the centre axis C, wherein each ridge 11 extends from the rake face 2 in a direction towards the abutment face 3. Each pair of adjacent ridges 11 define an intermediate valley 12 that extends in the first part 10a of the peripheral surface along the adjacent ridges 11 from the rake face 2 in a direction towards the abutment face 3. A peripheral edge 20 is formed at an intersection between the rake face 2 and the peripheral surface 10. As seen in a plan view along the centre axis C, this peripheral edge 20 has the shape of a substantially circular toothed ring with external teeth 21 that are congruent to each other and equally distributed about the centre axis C. The teeth 21 correspond in number to the number of ridges 11.

The above-mentioned ridges 11, and thereby also the above-mentioned teeth 21, are at least eight in number, and preferably ten or more. In the illustrated embodiment, the cutting insert 1 is provided with twelve such ridges 11, which implies that the peripheral edge 20 has twelve teeth 21.

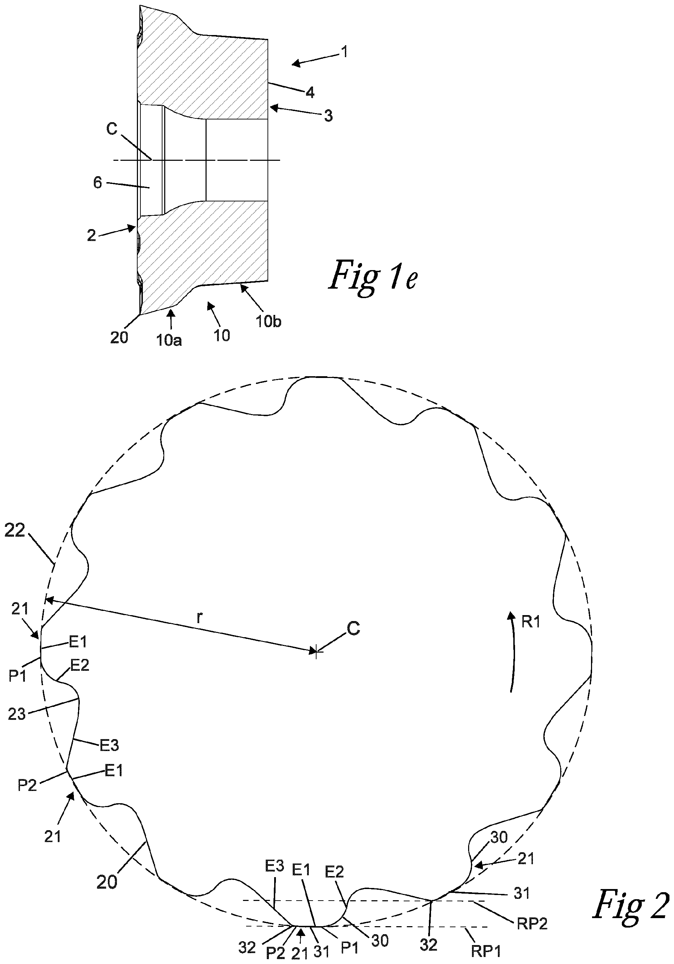

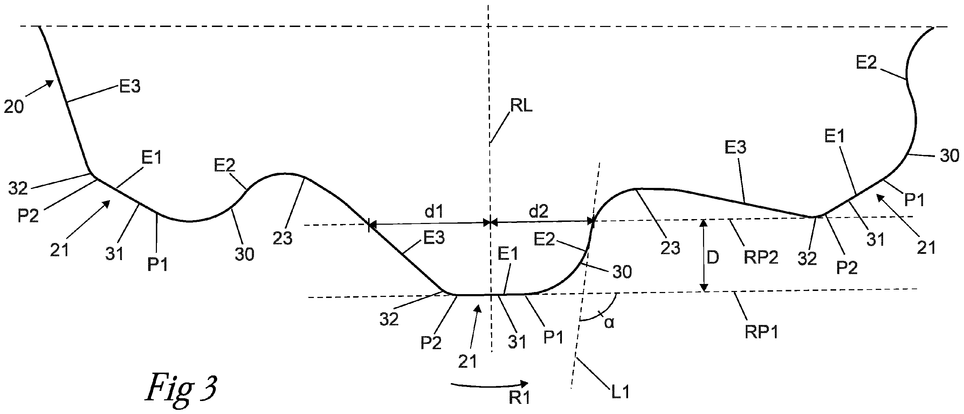

Each tooth 21 on the peripheral edge 20 comprises:
- a straight or convex first edge section E1 (see Figs 2 and 3) forming a tip of the tooth 21 and having a first end point P1 at a leading end and a second end point P2 at an opposite trailing end, as seen in a counter-clockwise direction R1 about the centre axis C when viewing the rake face 2 in a plan view along the centre axis C;
- a second edge section E2 connected to the first edge section E1 at the first end point P1 thereof and forming a leading flank edge of the tooth 21 as seen in said counter-clockwise direction R1; and
- a third edge section E3 connected to the first edge section E1 at the second end point P2 thereof and forming a trailing flank edge of the tooth 21 as seen in said counter-clockwise direction R1.

The first edge section E1 constitutes a so-called top land at the tooth tip.

In the illustrated embodiment, the first edge section E1 of each tooth 21 is slightly convex and has a radius of curvature that is larger than the radius r of a circumscribed circle 22 (see Fig 2) of the toothed ring formed by the peripheral edge 20. In this case, the radius of curvature of the first edge section E1 is with advantage 20 mm or more, preferably 30 mm or more, more preferably 50 mm or more. Said circumscribed circle 22 may have a radius r of 5-13 mm, preferably 7-10 mm. Thus, the cutting insert 1 is shown in a greatly enlarged scale in Figs 1a-1e.

The second edge section E2 of each tooth 21 meets the third edge section E3 of an adjacent tooth at a radially innermost point 23 (see Figs 2 and 3) of the part of the peripheral edge 20 located between the first end point P1 of the first edge section E1 connected to this second edge section E2 and the second end point P2 of the first edge section E1 connected to this third edge section E3 of the adjacent tooth, wherein the angular distance between this radially innermost point 23 and this second end point P2 is larger, preferably at least 50% larger, than the angular distance between this radially innermost point 23 and this first end point P1, as viewed from the centre axis C.

The cutting insert 1 comprises several sets of cutting edges, wherein each one of these sets of cutting edges is constituted by a part of a respective one of said teeth 21 and comprises a major cutting edge 30, a surface-wiping cutting edge 31 and a minor corner cutting edge 32 located consecutively along a part of the peripheral edge 20, wherein:
- the surface-wiping cutting edge 31 is constituted by said first edge section E1 of the associated tooth and extends between the first and second end points P1, P2 of this first edge section E1;
- the minor corner cutting edge 32 is constituted by a part of said third edge section E3 of the associated tooth and connected to the surface-wiping cutting edge 31 of the same set of cutting edges at the second end point P2 thereof; and
- the major cutting edge 30 is constituted by a part of said second edge section E2 of the associated tooth that extends from an imaginary first reference plane RP1 (see Figs 2 and 3) that is parallel to the centre axis C and contains the first and second end points P1, P2 of the first edge section E1 that forms the surface-wiping cutting edge 31 of the same set of cutting edges to an imaginary second reference plane RP2 that is parallel to said first reference plane RP1 and contains a tangent to the minor corner cutting edge 32 of an adjacent set of cutting edges associated with an adjacent tooth 21 immediately in front of the major cutting edge 30 as seen in said counter-clockwise direction R1.

Since the sets of cutting edges are associated with a respective one of the teeth 21 on the peripheral edge 20, the number of such sets corresponds to the number of teeth 21. Thus, in the illustrated embodiment, the cutting insert 1 is provided with twelve sets of cutting edges.

In each working position of the cutting insert 1, one of the different sets of cutting edges is in an active cutting position. Thus, the number of working positions corresponds to the number of sets of cutting edges. Consequently, in each one of the twelve different working positions of the illustrated cutting insert 1, the cutting edges 30, 31, 32 of one of the twelve different sets of cutting edges constitute the active cutting edges of the cutting insert.

The perpendicular distance D (see Fig 3) between said first reference plane RP1 and said second reference plane RP2 is with advantage 1 mm or smaller, preferably 0.8 mm or smaller, and preferably at least 0.5 mm.

The major cutting edge 30 of each set of cutting edges has a convex shape, or at least substantially convex shape, as seen in a plan view along the centre axis C. Furthermore, each major cutting edge 30 has an entering angle α of 75° or more, preferably 80° or more, in at least one point along its extension as seen in relation to the first reference plane RP1 associated with the same major cutting edge 30. The maximum entering angle α of the major cutting edge 30 is preferably smaller than or equal to 90° as seen in relation to the first reference plane RP1 associated with the same major cutting edge 30. In the illustrated embodiment, the major cutting edge 30 of each set of cutting edges has a maximum entering angle α of approximately 82°, as illustrated by the line L1 in Fig 3, which line L1 represents the steepest sloping tangent to the major cutting edge 30 as seen in relation to the associated first reference plane RP1.

The distance d1 (see Fig 3) along the second reference plane RP2 between the third edge section E3 of each tooth 21 and an imaginary reference line RL that extends perpendicularly to the first reference plane RP1 of the tooth 21 and intersects a centre of said first edge section E1 of the tooth 21 halfway between the first and second end points P1, P2 thereof is larger, preferably at least 10% larger, more preferably at least 20% larger, than a distance d2 along the second reference plane RP2 between the second edge section E2 of the tooth 21 and this reference line RL. Thus, the tooth 21 is asymmetric in relation to this reference line RL. The second edge section E2 of each tooth 21 has a steeper slope in relation to the first reference plane RP1 of the tooth as compared to the third edge section E3 of the same tooth.

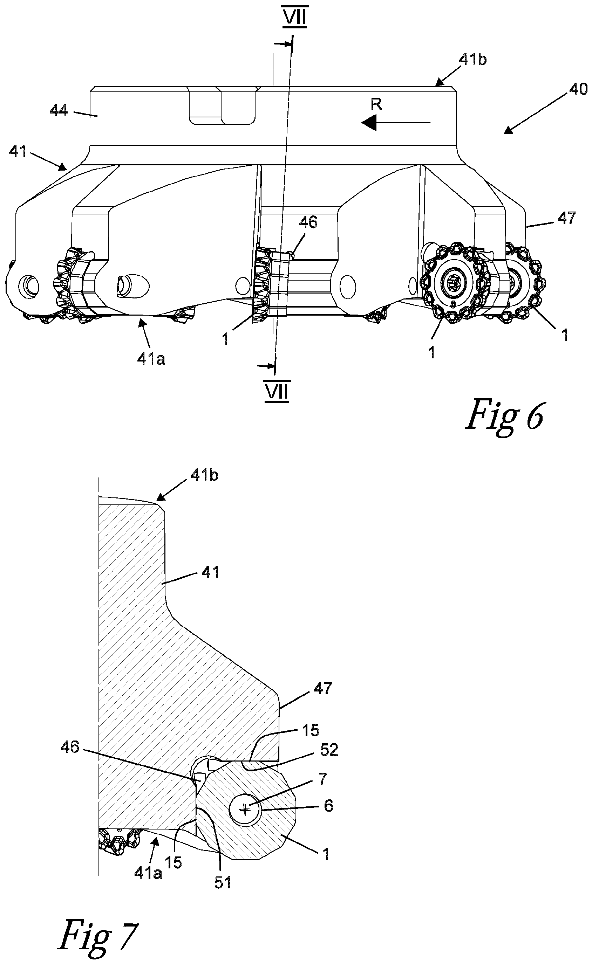

The above-mentioned second part 10b of the peripheral surface 10, i.e. the part of the peripheral surface 10 that is adjacent to and adjoins to the abutment face 3, is provided with several indexing means 14 equally distributed about the centre axis C and corresponding in number to the number of the ridges 11. In the illustrated embodiment, each one of said indexing means 14 is constituted by a respective abutment surface 15 on the second part 10b of the peripheral surface 10. In the illustrated example, each such abutment surface 15 is slightly concave as seen in any cross-sectional plane that extends across the abutment surface 15 and is perpendicular to the centre axis C. However, each such abutment surface 15 may as an alternative be flat, or at least essentially flat. Each one of these abutment surfaces 15 on the second part 10b of the peripheral surface 10 is configured to serve as an axial abutment surface of the cutting insert 1 in one of said working positions of the cutting insert, wherein the abutment surface 15 abuts against a corresponding axial support surface 52 (see Figs 7 and 8) in an insert seat 46 in a tool body 41 of a face milling cutter 40, and configured to serve as a radial abutment surface of the cutting insert 1 in another one of said working positions of the cutting insert, wherein the abutment surface 15 abuts against a corresponding radial support surface 51 in said insert seat 46.

In the illustrated embodiment, each one of the abutment surfaces 15 on the second part 10b of the peripheral surface 10 is slightly inclined outward away from the centre axis C as seen in a direction from the abutment face 3 towards the rake face 2 in any plane that extends across the abutment surface 15 and contains the centre axis C. Furthermore, as seen in any such plane, the ridges 11 on the first part 10a of the peripheral surface 10 are inclined outward away from the centre axis C as seen in a direction from the second part 10b of the peripheral surface 10 towards the rake face 2, wherein the angle of inclination of each ridge 11 is larger than the angle of inclination of each abutment surface 15, as illustrated in Fig 1e.

In the illustrated embodiment, all areas on the ridges 11 and valleys 12 on the first part 10a of the peripheral surface 10 project radially beyond the outer periphery of the second part 10b of the peripheral surface 10, as illustrated in Fig 1c.

The cutting insert 1 preferably has 360°/n rotational symmetry about the centre axis C, wherein n is an integer corresponding to the number of ridges 11. In the illustrated embodiment with twelve ridges 11, the cutting insert 1 has 30° rotational symmetry about the centre axis C. This rotational symmetry of the cutting insert 1 about the centre axis C implies:
- that the ridges 11 are identical to each other, within manufacturing tolerances;
- that the teeth 21 on the peripheral edge 20 are identical to each other, within manufacturing tolerances;
- that the major cutting edges 30 of the different sets of cutting edges are identical to each other, within manufacturing tolerances;
- that the surface-wiping cutting edges 31 of the different sets of cutting edges are identical to each other, within manufacturing tolerances;
- that the minor corner cutting edges 32 of the different sets of cutting edges are identical to each other, within manufacturing tolerances; and
- that the abutment surfaces 15 on the second part 10b of the peripheral surface 10 are identical to each other, within manufacturing tolerances.

In the illustrated embodiment, the rake face 2 is provided with a marking 8 in the form of a recess. The marking 8 is located in front of one of the teeth 21 and facilitates an identification of the different working positions of the cutting insert 1. Except for the marking 8, the rake face 2 has 30° rotational symmetry about the centre axis C.

Figs 4-10 illustrate a milling tool in the form of a face milling cutter 40. The face milling cutter 40 comprises a tool body 41 and is configured to be rotated about an axis of rotation 42 in an intended direction of rotation R. The tool body 41 has a rear end 41b and an opposite front end 41a. A centre axis 43 of the tool body 41 extends between the rear end 41b and the front end 41a of the tool body, wherein this centre axis 43 coincides with the axis of rotation 42 of the face milling cutter 40. A rear part of the tool body 41 forms a connection member 44, through which the tool body 41 is mountable, directly or via an intermediate tool holder, to a rotating spindle or the similar of a machine, for instance a milling machine.

A front part of the tool body 41 is provided with several insert seats 46, which are evenly or at least substantially evenly distributed in the circumferential direction of the tool body 41 and configured to receive a respective cutting insert 1. Thus, the insert seats 46 are evenly or at least substantially evenly distributed about the centre axis 43 of the tool body 41. Each insert seat 46 is located at a transition between the front end 41a and the periphery 47 of the tool body 41, wherein each insert seat 46 is open towards the front end 41a of the tool body 41 in order to allow a cutting insert 1 mounted in the insert seat to project in the axial direction of the tool body 41 beyond the front end 41a thereof and also open towards the periphery 47 of the tool body 41 in order to allow a cutting insert 1 mounted in the insert seat to project in the radial direction of the tool body 41 beyond the periphery thereof. A pocket 48 is provided in the tool body 41 in front of each insert seat 46 as seen in the intended direction of rotation R of the tool body 41.

In the illustrated embodiment, the tool body 41 is provided with seven insert seats 46 spaced apart in the circumferential direction of the tool body. However, the tool body 41 may as an alternative, inter alia depending on the diameter of the tool body, be provided with any other suitable number of insert seats 46. A smaller diameter tool body may for instance be provided with two insert seats, whereas a larger diameter tool body may be provided with more than seven insert seats.

A cutting insert 1 is mounted in each one of the insert seats 46 in the tool body 41. In the illustrated embodiment, the face milling cutter 40 is provided with cutting inserts 1 of the type illustrated in Figs 1a-1e. Each cutting insert 1 is configured to be releasably mounted to the associated insert seat 46. In the illustrated embodiment, each cutting insert 1 is fixed to the associated insert seat 46 by means of a fastening element 7 in the form of a screw, which extends through the through hole 6 in the cutting insert 1 and is engaged in a threaded hole 48 (see Figs 8 and 10) in a tangential support surface 50 in the insert seat. Each insert seat 46 is also provided with a radial support surface 51 and an axial support surface 52.

Each cutting insert 1 is mounted in the associated insert seat 46 in one of its working positions:
- with the abutment surface 4 on the abutment face 3 serving as a tangential abutment surface of the cutting insert 1 and abutting against the tangential support surface 50 in the insert seat 46,
- with one of the abutment surfaces 15 on the second part 10b of the peripheral surface 10 serving as a radial abutment surface of the cutting insert 1 and abutting against the radial support surface 51 in the insert seat 46,

- with another one of the abutment surfaces 15 on the second part 10b of the peripheral surface 10 serving as an axial abutment surface of the cutting insert 1 and abutting against the axial support surface 52 in the insert seat 46,
- with the first part 10a of the peripheral surface 10 received with play in the insert seat 46, i.e. without being in contact with any surface in insert seat 46, and
- with one of the teeth 21 on the peripheral edge 20 forming the axially foremost part of the cutting insert 1 and projecting in the axial direction of the tool body 41 beyond the front end 41a thereof, wherein the major cutting edge 30, the surface-wiping cutting edge 31 and the minor corner cutting edge 32 provided along this tooth 21 are in an active cutting position and thereby constitute the active cutting edges of the cutting insert 1 in the prevailing working position of the cutting insert.

The active major cutting edge 30 of each cutting insert 1 is facing radially outward away from the centre axis 43 of the tool body 41, whereas the active minor corner cutting edge 32 of each cutting insert 1 is facing radially inward toward the centre axis 43 of the tool body 41.

The surface-wiping cutting edge 31 that is in the active cutting position when the cutting insert 1 is mounted in the associated insert seat 46 in one of its working positions has a positive clearance as seen in any plane that extends across this active surface-wiping cutting edge 31 and contains the centre axis C of the cutting insert 1.

When any of the active cutting edges 30, 31, 32 of a cutting insert 1 has been worn out, the cutting insert 1 may be repositioned in its insert seat 46 and mounted in a new working position with another set of cutting edges of the cutting insert in the active cutting position.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A cutting insert for use in face milling, the cutting insert (1) being turnable into different working positions and comprising:
- a rake face (2) and an abutment face (3) arranged on opposite sides of the cutting insert (1), the cutting insert (1) having a centre axis (C) that extends between the rake face (2) and the abutment face (3), wherein the abutment face (3) comprises an abutment surface (4) that is configured to serve as a tangential abutment surface of the cutting insert (1) in said working positions of the cutting insert and abut against a corresponding tangential support surface (50) in an insert seat (46) in a tool body (41) of a face milling cutter when the cutting insert (1) is mounted in the insert seat in any of its working positions;
- a peripheral surface (10) extending around the cutting insert (1) between the rake face (2) and the abutment face (3), wherein a first part (10a) of the peripheral surface (10) that is adjacent to and adjoins to the rake face (2) is provided with at least eight radially protruding ridges (11) equally distributed about the centre axis (C) and each of which extending from the rake face (2) in a direction towards the abutment face (3), each pair of adjacent ridges (11) of the at least eight ridges forming a valley (12) that extends in the first part (10a) of the peripheral surface from the rake face (2) in a direction towards the abutment face (3) such that a peripheral edge (20) formed at an intersection between the rake face (2) and the peripheral surface (10), as seen in a plan view along the centre axis (C), has a shape of a substantially circular toothed ring with external teeth (21) congruent to each other and corresponding in number to the number of said ridges (11), wherein each one of these teeth (21) comprises:
• a straight or convex first edge section (E1) forming a tip of the tooth (21) and having a first end point (P1) at a leading end and a second end point (P2) at an opposite trailing end, as seen in a counter-clockwise direction (R1) about the centre axis (C) when viewing the rake face (2) in a plan view along the centre axis (C),
• a second edge section (E2) connected to the first edge section (E1) at said first end point (P1) and forming a leading flank edge of the tooth as seen in said counter-clockwise direction (R1), and
• a third edge section (E3) connected to the first edge section (E1) at said second end point (P2) and forming a trailing flank edge of the tooth as seen in said counter-clockwise direction (R1); and
- several sets of cutting edges, wherein each one of these several sets of cutting edges is constituted by a part of a respective one of said teeth (21),
**characterized in:**
- **that** each one of said several sets of cutting edges comprises a surface-wiping cutting edge (31), a major cutting edge (30) and a minor corner cutting edge (32), wherein the surface-wiping cutting edge (31) is constituted by said first edge section (E1) of the associated tooth and extends between the first and second end points (P1, P2) of this first edge section (E1), the minor corner cutting edge (32) is constituted by a part of said third edge section (E3) of the associated tooth and connected to the surface-wiping cutting edge (31) of the same set of cutting edges at the second end point (P2) thereof, and the major cutting edge (30) is constituted by a part of said second edge section (E2) of the associated tooth that extends from a first reference plane (RP1) that is parallel to the centre axis (C) and contains the first and second end points (P1, P2) of the first edge section (E1) that forms the surface-wiping cutting edge (31) of the same set of cutting edges to a second reference plane (RP2) that is parallel to said first reference plane (RP1) and contains a tangent to the minor corner cutting edge (32) of an adjacent set of cutting edges associated with an adjacent tooth immediately in front of the major cutting edge (30) as seen in said counter-clockwise direction (R1);
- **that** the major cutting edge (30) of each one of said several sets of cutting edges has an entering angle (α) of 75° or more in at least one point along its extension as seen in relation to the first reference plane (RP1) associated with the same major cutting edge (30); and
- **that** a distance (d1) along the second reference plane (RP2) between the third edge section (E3) of each tooth (21) and a reference line (RL) that extends perpendicularly to the first reference plane (RP1) of the tooth (21) and intersects a centre of said first edge section (E1) of the tooth (21) halfway between the first and second end points (P1, P2) thereof is larger, preferably at least 10% larger, more preferably at least 20% larger, than a distance (d2) along the second reference plane (RP2) between the second edge section (E2) of the tooth (21) and this reference line (RL).

2. A cutting insert according to claim 1, **characterized in that** that the major cutting edge (30) of each one of said several sets of cutting edges has an entering angle (α) of 80° or more in at least one point along its extension as seen in relation to the first reference plane (RP1) associated with the same major cutting edge (30).

3. A cutting insert according to claim 1 or 2, **characterized in that** the major cutting edge (30) of each one of said several sets of cutting edges has a maximum entering angle (α) that is smaller than or equal to 90° as seen in relation to the first reference plane (RP1) associated with the same major cutting edge (30).

4. A cutting insert according to any of claims 1-3, **characterized in that** the second edge section (E2) of each one of said teeth (21) meets the third edge section (E3) of an adjacent tooth at a radially innermost point (23) of the part of the peripheral edge (20) located between the first end point (P1) of the first edge section (E1) connected to this second edge section (E2) and the second end point (P2) of the first edge section (E1) connected to this third edge section (E3) of the adjacent tooth, wherein the angular distance between this radially innermost point (23) and this second end point (P2) is larger, preferably at least 50% larger, than the angular distance between this radially innermost point (23) and this first end point (P1), as viewed from the centre axis (C).

5. A cutting insert according to any of claims 1-4, **characterized in that** said ridges (11) on the first part (10a) of the peripheral surface (10) are at least ten, preferably at least twelve, in number.

6. A cutting insert according to any of claims 1-5, **characterized in that** the first edge section (E1) of each one of said teeth (21) is convex and has a radius of curvature that is larger than a radius (r) of a circumscribed circle (22) of said toothed ring.

7. A cutting insert according to claim 6, **characterized in that** said radius of curvature is 20 mm or more, preferably 30 mm or more, more preferably 50 mm or more.

8. A cutting insert according to any of claims 1-7, **characterized in that** a circumscribed circle (22) of said toothed ring has a radius (r) of 5-13 mm, preferably 7-10 mm.

9. A cutting insert according to any of claims 1-8, **characterized in that** the perpendicular distance (D) between said first reference plane (RP1) and said second reference plane (RP2) is 1 mm or smaller, preferably 0.8 mm or smaller.

10. A cutting insert according to any of claims 1-8, **characterized in that** the perpendicular distance (D) between said first reference plane (RP1) and said second reference plane (RP2) is 0.5-1 mm.

11. A cutting insert according to any of claims 1-10, **characterized in that** a second part (10b) of the peripheral surface (10) that is adjacent to and adjoins to the abutment face (3) is provided with several indexing means (14) equally distributed about the centre axis (C) and corresponding in number to the number of said ridges (11).

12. A cutting insert according to claim 11, **characterized in that** each one of said several indexing means (14) is constituted by a respective abutment surface (15) on the second part (10b) of the peripheral surface (10) that is essentially flat or that is concave as seen in any plane that extends across the abutment surface (15) and is perpendicular to the centre axis (C).

13. A cutting insert according to claim 12, **characterized in that** each one of said abutment surfaces (15) on the second part (10b) of the peripheral surface (10) is configured to serve as an axial abutment surface of the cutting insert (1) in one of said working positions of the cutting insert and configured to serve as a radial abutment surface of the cutting insert (1) in another one of said working positions of the cutting insert.

14. A cutting insert according to any of claims 11-13, **characterized in that** all areas on said ridges (11) and valleys (12) on the first part (10a) of the peripheral surface (10) project radially beyond an outer periphery of the second part (10b) of the peripheral surface (10).

15. A cutting insert according to any of claims 1-14, **characterized in that** the cutting insert (1) has 360°/n rotational symmetry about the centre axis (C), wherein n is an integer corresponding to the number of said ridges (11).

16. A face milling cutter comprising at least one cutting insert (1) according to any of claims 1-15.

17. A face milling cutter according to claim 16, **characterized in that** the face milling cutter (40) comprises a tool body (41) with an insert seat (46) configured to receive said at least one cutting insert (1), wherein the surface-wiping cutting edge (31) of one of said several sets of cutting edges of this cutting insert (1) is configured to be in an active cutting position when the cutting insert (1) is mounted in the insert seat (46) in one of its working positions and wherein this active surface-wiping cutting edge (31) has a positive clearance as seen in any plane that extends across this active surface-wiping cutting edge (31) and contains the centre axis (C) of the cutting insert (1).
